# EUROPEAN PATENT APPLICATION

(11) **EP 3 187 622 A1**
(43) Date of publication of application: **05.07.2017**
(21) Application number: 15826507.4
(22) Date of filing: 28.07.2015
(51) Int. Cl.: C23C 18/18, C08F 4/40, C08F 8/30, C09D 4/02, C09D 5/00, C09D 201/02

(54) **ELECTROLESS PLATING UNDERCOAT AGENT CONTAINING HYPERBRANCHED POLYMER, FINE METAL PARTICLES, AND RESIN PRIMER**

(30) Priority: 30.07.2014 JP 2014155115
(71) Applicant: Nissan Chemical Industries, Ltd., Chiyoda-ku Tokyo 101-0054 (JP)
(72) Inventor: SAITO, Daigo, Funabashi-shi Chiba 274-0052 (JP); KOJIMA, Keisuke, Funabashi-shi Chiba 274-0052 (JP); MORIMOTO, Yudai, Funabashi-shi Chiba 274-0052 (JP)
(74) Representative: Hoffmann Eitle
(86) International application number: PCT/JP2015/071349
(87) International publication number: WO 2016/017625

(57) **Abstract**

There is provided a novel primer for use in the pretreatment step in electroless plating that is environmentally friendly, can be easily treated in fewer steps, can achieve a cost reduction, and is especially excellent in adhesion between a base material to be plated and a metallic film. A primer for forming a metal plating film on a base material by electroless plating, the primer comprising: (a) a hyperbranched polymer having an ammonium group at a molecular terminal and having a weight-average molecular weight of 1,000 to 5,000,000; (b) metal fine particles; and (c) a resin primer for electroless plating.

## Description

### TECHNICAL FIELD

The present invention relates to a primer for electroless plating comprising a hyperbranched polymer, metal fine particles, and a resin primer.

### BACKGROUND ART

Electroless plating is extensively employed in various fields including decorating applications where a luxurious and aesthetic appearance is imparted to a resin molded body for an automotive part and the like, electromagnetic shielding, and wiring technology for a printed circuit board, a large scale integrated circuit, and the like. The reason is that electroless plating can produce a coating film with a uniform thickness regardless of the kind and shape of the base material by simply immersing the base material in a plating solution and can produce a metal plating film also on a nonconductor such as plastic, ceramic, and glass.

Generally, when a metal plating film is formed on a base material (an object to be plated) by electroless plating, a pretreatment for electroless plating to increase adhesion between the base material and the metal plating film is carried out. Specifically, the surface to be treated is roughened and/or hydrophilized by various etching means, followed by sensitization where an adsorbing substance that promotes adsorption of a plating catalyst on the surface to be treated is provided on the surface to be treated and activation where the plating catalyst is allowed to adsorb on the surface to be treated. Typically, sensitization involves immersion of the object to be treated in an acidic solution of stannous chloride to promote deposition of the metal (Sn²⁺) capable of acting as a reducing agent on the surface to be treated. The sensitized surface to be treated is immersed in an acidic solution of palladium chloride for activation. In this step, the palladium ion in the solution is reduced by the metal that is a reducing agent (tin ion: Sn²⁺) and deposited on the surface to be treated as an active palladium catalyst nucleus. After this pretreatment, the processed base material is immersed in an electroless plating solution to form a metal plating film on the surface to be treated.

Hyperbranched polymers are classified as dendritic polymers and have intentionally introduced branches, the most prominent feature of which is a large number of terminal groups. If the terminal groups are imparted with reactive functional groups, the polymer has reactive functional groups quite densely and is expected to find use as, for example, a highly sensitive scavenger for functional substances such as catalysts, a sensitive multifunctional cross-linking agent, or a dispersing or coating agent for metals or metal oxides.

For example, an example has been disclosed where a composition containing a hyperbranched polymer having an ammonium group and metal fine particles is used as a reduction catalyst (Patent Document 1).

### SUMMARY OF THE INVENTION

### Problem to be Solved by the Invention

As described above, the conventional electroless plating process needs some improvements in terms of the environmental impact, the costs, and the troublesome operation, including the use of a chromium compound (chromic acid) in the roughening step carried out in the pretreatment and the many steps involved in the pretreatment.

As the technology for molding a resin housing has recently improved, a method of plating the surface of a finely produced housing as-is is required. In particular, due to fine electronic circuit formation and faster transmission of electric signals, a method of performing electroless plating that provides a highly adhesive plating film on a smooth substrate is required.

The present invention focuses on these problems and aims to provide a novel primer for use in the pretreatment step in electroless plating that is environmentally friendly, can be easily treated in fewer steps, can achieve a cost reduction, and is especially excellent in adhesion between a base material to be plated and a metallic film. Means for Solving the Problems

As a result of intensive study to achieve the objects, the present inventors have found that a layer obtained by combining a hyperbranched polymer having an ammonium group at a molecular terminal, metal fine particles, and a resin primer for electroless plating and coating a base material with the combination has superior platability as a priming layer for electroless metal plating and is especially useful for improving adhesion between a metal plating film and a base material to be plated and completed the present invention.

Specifically, as a first aspect, the present invention relates to a primer for forming a metal plating film on a base material by electroless plating, the primer comprising: (a) a hyperbranched polymer having an ammonium group at a molecular terminal and having a weight-average molecular weight of 1,000 to 5,000,000; (b) metal fine particles; and (c) a resin primer for electroless plating.

As a second aspect, the present invention relates to the primer according to the first aspect, in which the resin primer for electroless plating (c) is at least one resin primer selected from the group consisting of an acrylic resin primer, an acrylic/silicone resin primer, an acrylic/urethane resin primer, a polyester resin primer, a fluorine-based resin primer, an epoxy resin primer, and a polyurethane resin primer.

As a third aspect, the present invention relates to the primer according to the second aspect, in which the resin primer for electroless plating (c) is at least one resin primer selected from the group consisting of an acrylic/silicone resin primer, an acrylic/urethane resin primer, a polyester resin primer, and a polyurethane resin primer.

As a fourth aspect, the present invention relates to the primer according to any one of the first aspect to the third aspect, in which the ammonium group of the hyperbranched polymer (a) is attached to the metal fine particles (b) to form a complex.

As a fifth aspect, the present invention relates to the primer according to any one of the first aspect to the fourth aspect, in which the hyperbranched polymer (a) is a hyperbranched polymer of Formula [1]: 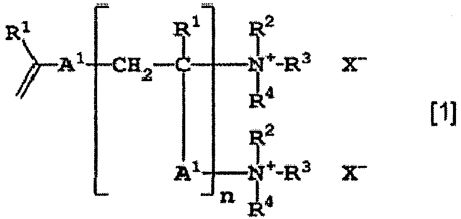 (where R¹ are each independently a hydrogen atom or a methyl group; R² to R⁴ are each independently a hydrogen atom, a linear, branched, or cyclic C₁₋₂₀ alkyl group (where the alkyl group is optionally substituted with an alkoxy group, a hydroxy group, an ammonium group, a carboxy group, or a cyano group), a C₇₋₂₀ arylalkyl group (where the arylalkyl group is optionally substituted with an alkoxy group, a hydroxy group, an ammonium group, a carboxy group, or a cyano group), or -(CH₂CH₂O)ₘR⁵ (where R⁵ is a hydrogen atom or a methyl group; and m is an integer of 2 to 100), or two groups of R² to R⁴ together are a linear, branched, or cyclic alkylene group, or a ring may be formed by R² to R⁴ together with a nitrogen atom to which R² to R⁴ are attached; X⁻ is an anion; n is the number of repeating unit structures and an integer of 5 to 100,000; and A¹ is a structure of Formula [2]: 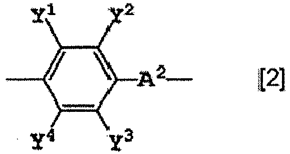 (where A² is a linear, branched, or cyclic C₁₋₃₀ alkylene group optionally containing an ether bond or an ester bond; and Y¹ to Y⁴ are each independently a hydrogen atom, a C₁₋₂₀ alkyl group, a C₁₋₂₀ alkoxy group, a nitro group, a hydroxy group, an amino group, a carboxy group, or a cyano group)).

As a sixth aspect, the present invention relates to the primer according to the fifth aspect, in which the hyperbranched polymer (a) is a hyperbranched polymer of Formula [3]: 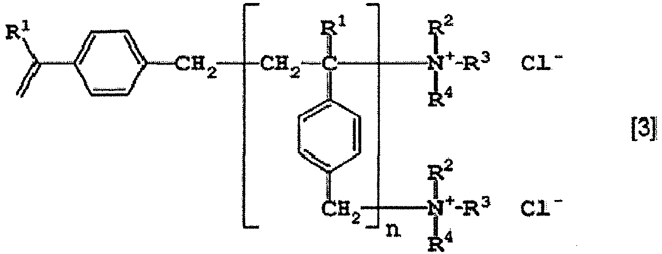 (where R¹ to R⁴, and n are the same as those defined above).

As a seventh aspect, the present invention relates to the primer according to any one of the first aspect to the sixth aspect, in which the metal fine particles (b) are metal fine particles of at least one selected from the group consisting of iron (Fe), cobalt (Co), nickel (Ni), copper (Cu), palladium (Pd), silver (Ag), tin (Sn), platinum (Pt), and gold (Au).

As an eighth aspect, the present invention relates to the primer according to the seventh aspect, in which the metal fine particles (b) are palladium fine particles.

As a ninth aspect, the present invention relates to the primer according to the seventh aspect or the eighth aspect, in which the metal fine particles (b) have an average particle diameter of 1 nm to 100 nm.

As a tenth aspect, the present invention relates to a priming layer for electroless plating, obtained by forming a layer of the primer as described in any one of the first aspect to the ninth aspect.

As an eleventh aspect, the present invention relates to a metal plating film, formed by performing electroless plating on the priming layer for electroless plating as described in the tenth aspect, on the priming layer.

As a twelfth aspect, the present invention relates to a metal-coated base material comprising: a base material; the priming layer for electroless plating as described in the tenth aspect formed on the base material; and the metal plating film as described in the eleventh aspect formed on the priming layer for electroless plating.

As a thirteenth aspect, the present invention relates to a method for producing a metal-coated base material, the method comprising: process A: applying the primer as described in any one of the first aspect to the ninth aspect onto a base material to form a priming layer; and process B: immersing the base material having the priming layer in an electroless plating bath to form a metal plating film.

### Effects of the Invention

The primer of the present invention can be applied on a base material simply to form a priming layer for electroless metal plating easily. The primer of the present invention can form a priming layer having excellent adhesion to the base material without forming a primer layer that has been conventionally formed on the base material in order to increase adhesion with a metal plating film. Furthermore, the primer of the present invention can provide a fine line having a width on the order of micrometers, which makes the primer suitable for various wiring technologies.

A metal plating film can be easily formed simply by immersing a priming layer for electroless metal plating formed from the primer of the present invention in an electroless plating bath, and a metal-coated base material comprising a base material, a priming layer, and a metal plating film can be easily obtained.

The metal plating film has excellent adhesion to the underlying priming layer.

Specifically, the primer of the present invention may be used to form a priming layer on a base material, which leads to the formation of a metal plating film having excellent adhesion to the base material.

### BRIEF DESCRIPTION OF THE DRAWINGS

[FIG. 1] FIG. 1 is a ¹H NMR spectrum of a hyperbranched polymer having a chlorine atom at a molecular terminal (HPS-Cl) obtained in Synthesis Example 1.
[FIG. 2] FIG. 2 is a ¹³C NMR spectrum of a hyperbranched polymer having a dimethyloctylammonium group at a molecular terminal (HPS-N(Me)₂OctCl) obtained in Synthesis Example 2.

### MODES FOR CARRYING OUT THE INVENTION

The present invention will be described in more detail.

The primer of the present invention comprises (a) a hyperbranched polymer having an ammonium group and a weight-average molecular weight of 1,000 to 5,000,000, (b) metal fine particles, and (c) a resin primer for electroless plating.

The primer of the present invention is suitably used as a primer for forming a metal plating film on a base material by electroless plating.

### [Primer]

### <(a) Hyperbranched polymer>

The hyperbranched polymer for use in the primer of the present invention is a polymer having an ammonium group at a molecular terminal and a weight-average molecular weight of 1,000 to 5,000,000. Specific examples thereof include a hyperbranched polymer of Formula [1]:

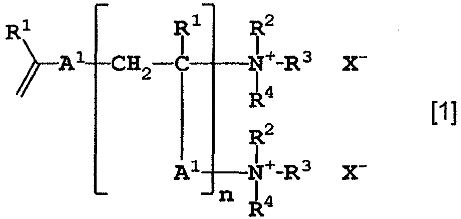

In Formula [1], R¹ are each independently a hydrogen atom or a methyl group.

R² to R⁴ are each independently a hydrogen atom, a linear, branched, or cyclic C₁₋₂₀ alkyl group, a C₇₋₂₀ arylalkyl group, or -(CH₂CH₂O)ₘR⁵ (where R⁵ is a hydrogen atom or a methyl group; and m is an integer of 2 to 100). The alkyl group and the arylalkyl group are optionally substituted with an alkoxy group, a hydroxy group, an ammonium group, a carboxy group, or a cyano group. Alternatively, two groups of R² to R⁴ together are a linear, branched, or cyclic alkylene group, or a ring may be formed by R² to R⁴ together with the nitrogen atom to which they are attached.

X⁻ is an anion, and n is the number of repeating unit structures and an integer of 5 to 100,000.

Examples of the linear C₁₋₂₀ alkyl group in R² to R⁴ include methyl group, ethyl group, n-propyl group, n-butyl group, n-pentyl group, n-hexyl group, n-heptyl group, n-octyl group, n-nonyl group, n-decyl group, n-undecyl group, n-dodecyl group, n-tridecyl group, n-tetradecyl group, n-pentadecyl group, n-hexadecyl group, n-heptadecyl group, n-octadecyl group, n-nonadecyl group, and n-eicosyl group. A group having eight or more carbon atoms is preferred because the primer with such a group is sparingly soluble in an electroless plating solution and, in particular, a n-octyl group is preferred. Examples of the branched alkyl group include isopropyl group, isobutyl group, sec-butyl group, and tert-butyl group. Examples of the cyclic alkyl group include groups having a cyclopentyl ring or cyclohexyl ring structure.

Examples of the C₇₋₂₀ arylalkyl group in R² to R⁴ include benzyl group and phenethyl group.

Examples of the linear alkylene group that two groups of R² to R⁴ together form include methylene group, ethylene group, trimethylene group, tetramethylene group, and hexamethylene group. Examples of the branched alkylene group include methylethylene group, butan-1,3-diyl group, and 2-methylpropane -1,3-diyl group. Examples of the cyclic alkylene group include monocyclic, multicyclic, bridged cyclic C₃₋₃₀ alicyclic aliphatic groups. Specific examples thereof include groups having monocyclic, bicyclic, tricyclic, tetracyclic, pentacyclic structures, or the like which have four or more carbon atoms. These alkylene groups may contain a nitrogen atom, a sulfur atom, or an oxygen atom in the groups.

The ring formed by R² to R⁴ together with the nitrogen atom to which they are attached in the structure of Formula [1] may contain a nitrogen atom, a sulfur atom, or an oxygen atom in the ring, and examples thereof include pyridine ring, pyrimidine ring, pyrazine ring, quinoline ring, and bipyridyl ring.

Preferable examples of the combination of R² to R⁴ include [methyl group, methyl group, methyl group], [methyl group, methyl group, ethyl group], [methyl group, methyl group, n-butyl group], [methyl group, methyl group, n-hexyl group], [methyl group, methyl group, n-octyl group], [methyl group, methyl group, n-decyl group], [methyl group, methyl group, n-dodecyl group], [methyl group, methyl group, n-tetradecyl group], [methyl group, methyl group, n-hexadecyl group], [methyl group, methyl group, n-octadecyl group], [ethyl group, ethyl group, ethyl group], [n-butyl group, n-butyl group, n-butyl group], [n-hexyl group, n-hexyl group, n-hexyl group], and [n-octyl group, n-octyl group, n-octyl group]. Among them, the combinations of [methyl group, methyl group, n-octyl group] and [n-octyl group, n-octyl group, n-octyl group] are preferable.

Preferable examples of the anion X⁻ include a halogen atom, PF₆⁻, BF₄⁻, or a perfluoroalkane sulfonate.

In Formula [1], A¹ is a structure of Formula [2]:

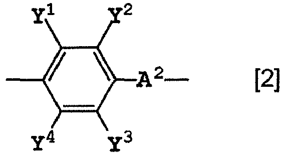

In Formula [2], A² is a linear, branched, or cyclic C₁₋₃₀ alkylene group optionally containing an ether bond or an ester bond.

Y¹ to Y⁴ are each independently a hydrogen atom, a C₁₋₂₀ alkyl group, a C₁₋₂₀ alkoxy group, a nitro group, a hydroxy group, an amino group, a carboxy group, or a cyano group.

Specific examples of the alkylene group of A² include linear alkylene groups including methylene group, ethylene group, trimethylene group, tetramethylene group, and hexamethylene group, and branched alkylene groups including an methylethylene group, butan-1,3-diyl group, and 2-methylpropane -1,3-diyl group. Examples of the cyclic alkylene group include monocyclic, multicyclic, and bridged cyclic C₃₋₃₀ alicyclic aliphatic groups. Specific examples thereof include groups having monocyclic, bicyclic, tricyclic, tetracyclic, pentacyclic structures, or the like which have four or more carbon atoms. For example, structural examples of the alicyclic moieties (a) to (s) in the alicyclic aliphatic groups are shown below:

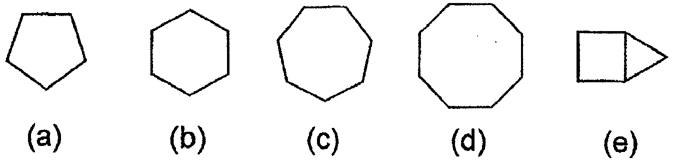

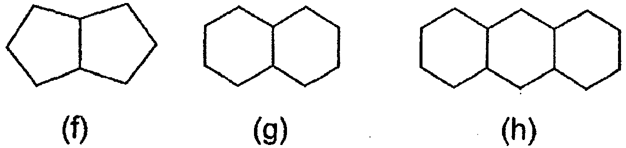

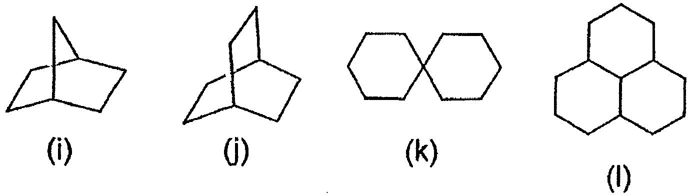

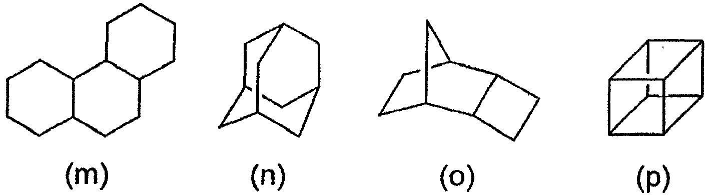

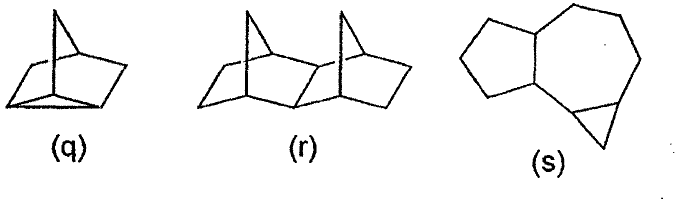

In Formula [2] above, examples of the C₁₋₂₀ alkyl group of Y¹ to Y⁴ include methyl group, ethyl group, isopropyl group, cyclohexyl group, and n-pentyl group. Examples of the C₁₋₂₀ alkoxy group include methoxy group, ethoxy group, isopropoxy group, cyclohexyloxy group, and n-pentyloxy group. Y¹ to Y⁴ are preferably a hydrogen atom or a C₁₋₂₀ alkyl group.

Examples of the hyperbranched polymer for use in the present invention preferably include a hyperbranched polymer of Formula [3]:

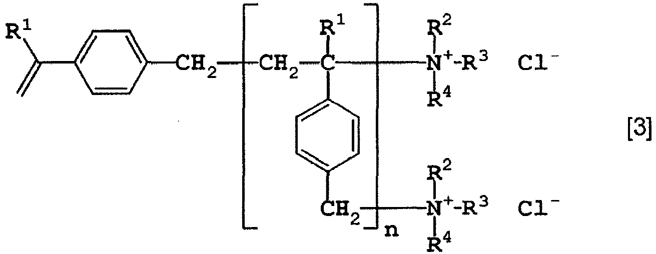

In Formula [3], R¹ to R⁴, and n are the same as those defined above.

A hyperbranched polymer for use in the present invention having an ammonium group at a molecular terminal can be obtained, for example, by allowing a hyperbranched polymer having a halogen atom at a molecular terminal to react with an amine compound.

A hyperbranched polymer having a halogen atom at a molecular terminal can be produced from a hyperbranched polymer having a dithiocarbamate group at a molecular terminal according to the description of WO 2008/029688 pamphlet. The hyperbranched polymer having a dithiocarbamate group at a molecular terminal is commercially available and HYPERTECH (registered trademark) HPS-200 manufactured by NISSAN CHEMICAL INDUSTRIES, LTD. and the like can be suitably used.

Examples of the amine compound that can be used in the reaction include primary amines including aliphatic amines such as methylamine, ethylamine, n-propylamine, isopropylamine, n-butylamine, isobutylamine, sec-butylamine, tert-butylamine, n-pentylamine, n-hexylamine, n-heptylamine, n-octylamine, n-nonylamine, n-decylamine, n-undecylamine, n-dodecylamine, n-tridecylamine, n-tetradecylamine, n-pentadecylamine, n-hexadecylamine, n-heptadecylamine, n-octadecylamine, n-nonadecylamine, and n-eicosylamine; alicyclic amines such as cyclopentylamine and cyclohexylamine; aralkyl amines such as benzylamine and phenethylamine; and aromatic amines, for example, anilines such as aniline, p-n-butylaniline, p-tert-butylaniline, p-n-octylaniline, p-n-decylaniline, p-n-dodecylaniline, and p-n-tetradecylaniline, naphthylamines such as 1-naphthylamine and 2-naphthylamine, aminoanthracenes such as 1-aminoanthracene and 2-aminoanthracene, aminoanthraquinones such as 1-aminoanthraquinone, aminobiphenyls such as 4-aminobiphenyl and 2-aminobiphenyl, aminofluorenes such as 2-aminofluorene, 1-amino-9-fluorenone, and 4-amino-9-fluorenone, aminoindanes such as 5-aminoindane, aminoisoquinolines such as 5-aminoisoquinoline, and aminophenanthrenes such as 9-aminophenanthrene. Further examples thereof include amine compounds such as N-(tert-butoxycarbonyl)-1,2-ethylenediamine, N-(tert-butoxycarbonyl)-1,3-propylenediamine, N-(tert-butoxycarbonyl)-1,4-butylenediamine, N-(tert-butoxycarbonyl)-1,5-pentamethylenediamine, N-(tert-butoxycarbonyl)-1,6-hexamethylenediamine, N-(2-hydroxyethyl)amine, N-(3-hydroxypropyl)amine, N-(2-methoxyethyl)amine, and N-(2-ethoxyethyl)amine.

Examples of secondary amines include aliphatic amines such as dimethylamine, diethylamine, di-n-propylamine, diisopropylamine, di-n-butylamine, diisobutylamine, di-sec-butylamine, di-n-pentylamine, di-n-hexylamine, di-n-octylamine, di-n-dodecylamine, di-n-hexadecylamine, di-n-octadecylamine, ethylmethylamine, methyl-n-propylamine, methyl-n-butylamine, methyl-n-pentylamine, methyl-n-octylamine, methyl-n-decylamine, methyl-n-dodecylamine, methyl-n-tetradecylamine, methyl-n-hexadecylamine, methyl-n-octadecylamine, ethylisopropylamine, ethyl-n-butylamine, ethyl-n-pentylamine, and ethyl-n-octylamine; alicyclic amines such as dicyclohexylamine; aralkyl amines such as dibenzylamine; aromatic amines such as diphenylamine; and nitrogen-containing heterocyclic compounds such as phthalimide, pyrrole, piperidine, piperazine, and imidazole. Further examples thereof include bis(2-hydroxyethyl)amine, bis(3-hydroxypropyl)amine, bis(2-ethoxyethyl)amine, and bis(2-propoxyethyl)amine.

Examples of tertiary amines include aliphatic amines such as trimethylamine, triethylamine, tri-n-propylamine, tri-n-butylamine, tri-n-pentylamine, tri-n-hexylamine, tri-n-octylamine, tri-n-dodecylamine, dimethylethylamine, dimethyl-n-butylamine, dimethyl-n- hexylamine, dimethyl-n-octylamine, dimethyl-n-decylamine, diethyl-n-decylamine, dimethyl-n-dodecylamine, dimethyl-n-tetradecylamine, dimethyl-n-hexadecylamine, dimethyl-n-octadecylamine, and dimethyl-n-eicosylamine; and nitrogen-containing heterocyclic compounds such as pyridine, pyrazine, pyrimidine, quinoline, 1-methylimidazole, 4,4'-bipyridyl, and 4-methyl-4,4'-bipyridyl.

The amine compound can be used in these reactions in 0.1 molar equivalent to 20 molar equivalents, preferably 0.5 molar equivalent to 10 molar equivalents, and more preferably 1 molar equivalent to 5 molar equivalents per mole of halogen atom of the hyperbranched polymer having a halogen atom at a molecular terminal.

The reaction between the hyperbranched polymer having a halogen atom at a molecular terminal and the amine compound can be carried out in water or an organic solvent in the presence or absence of a base. The solvent used is preferably capable of dissolving the hyperbranched polymer having a halogen atom at a molecular terminal and the amine compound. A solvent capable of dissolving the hyperbranched polymer having a halogen atom at a molecular terminal and the amine compound and incapable of dissolving a hyperbranched polymer having an ammonium group at a molecular terminal would be more suitable for easy isolation.

Any solvent may be used in the reaction, provided the solvent does not substantially inhibit the reaction from proceeding, and examples thereof include water; alcohols such as isopropyl alcohol; organic acids such as acetic acid; aromatic hydrocarbons such as benzene, toluene, xylene, ethylbenzene, and 1,2-dichlorobenzene; ethers such as tetrahydrofuran (THF) and diethyl ether; ketones such as acetone, methyl ethyl ketone (MEK), methyl isobutyl ketone (MIBK), and cyclohexanone; halides such as chloroform, dichloromethane, and 1,2-dichloroethane; aliphatic hydrocarbons such as n-hexane, n-heptane, and cyclohexane; and amides such as N,N-dimethylformamide (DMF), N,N-dimethylacetamide, and N-methyl-2-pyrrolidone (NMP). These solvents may be used alone, or two or more solvents may be used in combination. The mass of the solvent used is 0.2 to 1,000 times, preferably 1 to 500 times, more preferably 5 to 100 times, and most preferably 5 to 50 times the mass of the hyperbranched polymer having a halogen atom at a molecular terminal.

As a suitable base, commonly used are inorganic compounds including alkali metal hydroxides and alkaline-earth metal hydroxides (for example, sodium hydroxide, potassium hydroxide, and calcium hydroxide), alkali metal oxides and alkaline-earth metal oxides (for example, lithium oxide, and calcium oxide), alkali metal hydrides and alkaline-earth metal hydrides (for example, sodium hydride, potassium hydride, and calcium hydride), alkali metal amides (for example, sodium amide), alkali metal carbonates and alkaline-earth metal carbonates (for example, lithium carbonate, sodium carbonate, potassium carbonate, and calcium carbonate), and alkali metal bicarbonates (for example, sodium bicarbonate), and organometallic compounds including alkali metal alkyls, alkyl magnesium halides, alkali metal alkoxides, alkaline-earth metal alkoxides, and dimethoxymagnesium. Potassium carbonate and sodium carbonate are particularly suitable. The base is used in 0.2 molar equivalent to 10 molar equivalents, preferably 0.5 molar equivalent to 10 molar equivalents, and most preferably 1 molar equivalent to 5 molar equivalents per mole of halogen atom of the hyperbranched polymer having a halogen atom at a molecular terminal.

Oxygen in the reaction system is preferably thoroughly removed before this reaction is started and it is suitable to replace the atmosphere of the system with inert gases such as nitrogen and argon. The reaction condition is suitably selected from the reaction time range of 0.01 hour to 100 hours and the reaction temperature range of 0°C to 300°C. Preferably, the reaction time is 0.1 hour to 72 hours and the reaction temperature is 20°C to 150°C.

When a tertiary amine is used, the hyperbranched polymer of Formula [1] can be obtained whether or not a base is present.

When a primary amine or a secondary amine compound is reacted with a hyperbranched polymer having a halogen atom at a molecular terminal in the absence of a base, a corresponding hyperbranched polymer having a terminal ammonium group, i.e., a protonated secondary amine terminal group or a protonated tertiary amine terminal group can be obtained, respectively. Even when a base is used in the reaction, the reactants may be mixed with an aqueous solution of an acid such as hydrogen chloride, hydrogen bromide, and hydrogen iodide in an organic solvent to obtain a corresponding hyperbranched polymer having a terminal ammonium group, i.e., a protonated secondary amine terminal group or a protonated tertiary amine terminal group.

The hyperbranched polymer has a weight-average molecular weight Mw of 1,000 to 5,000,000, more preferably 2,000 to 200,000, and most preferably 3,000 to 100,000 in terms of polystyrene as measured by gel permeation chromatography. The degree of distribution: Mw (weight-average molecular weight)/ Mn (number-average molecular weight) is 1.0 to 7.0, preferably 1.1 to 6.0, and more preferably 1.2 to 5.0.

### <(b) Metal fine particles>

The metal fine particles for use in the primer of the present invention are not specifically limited, and examples of metal species include iron (Fe), cobalt (Co), nickel (Ni), copper (Cu), palladium (Pd), silver (Ag), tin (Sn), platinum (Pt), gold (Au), and an alloy of these metals. These metals may be used alone, or an alloy of two or more metals may be used. Among these metals, palladium fine particles are included as suitable metal fine particles. Oxides of the metals may also be used as metal fine particles.

The metal fine particles are obtained by reduction of a metal ion, for example, by irradiating an aqueous solution of a metal salt with a high-pressure mercury lamp or adding to the aqueous solution a compound having a reducing action (so-called reducing agent). For example, a metal ion may be reduced by, for example, adding an aqueous solution of a metal salt to a solution dissolving the hyperbranched polymer and irradiating the resultant mixture with ultraviolet light or adding an aqueous solution of a metal salt and a reducing agent to the solution of the hyperbranched polymer to form a complex of the hyperbranched polymer and the metal fine particles concurrently with the preparation of a primer comprising the hyperbranched polymer and the metal fine particles.

Examples of the metal salt include chloroauric acid, silver nitrate, copper sulfate, copper nitrate, copper acetate, tin chloride, platinous chloride, chloroplatinic acid, Pt(dba)₂[dba=dibenzylideneacetone], Pt(cod)₂[cod=1,5-cyclooctadiene], Pt(CH₃)₂(cod), palladium chloride, palladium acetate (Pd(OC(=O)CH₃)₂), palladium nitrate, Pd₂(dba)₃·CHCl₃, Pd(dba)₂, rhodium chloride, rhodium acetate, ruthenium chloride, ruthenium acetate, Ru(cod)(cot)[cot = cyclooctatriene], iridium chloride, iridium acetate, and Ni(cod)₂.

The reducing agent is not specifically limited. Although various reducing agents may be used, a reducing agent is preferably selected depending on the metal species added in the intended primer and other factors. Examples of the reducing agent that can be used include metal borohydrides such as sodium borohydride and potassium borohydride; aluminum hydrides such as lithium aluminum hydride, potassium aluminum hydride, cesium aluminum hydride, beryllium aluminum hydride, magnesium aluminum hydride, and calcium aluminum hydride; hydrazine compounds; citric acid and salts thereof; succinic acid and salts thereof; ascorbic acid and salts thereof; primary or secondary alcohols such as methanol, ethanol, isopropyl alcohol, and polyols; tertiary amines such as trimethylamine, triethylamine, diisopropylethylamine, diethylmethylamine, tetramethylethylenediamine (TMEDA), and ethylenediaminetetraacetic acid (EDTA); hydroxylamines; and phosphines such as tri-n-propylphosphine, tri-n-butylphosphine, tricyclohexylphosphine, tribenzylphosphine, triphenylphosphine, triethoxyphosphine, 1,2-bis(diphenylphosphino)ethane (DPPE), 1,3-bis(diphenylphosphino)propane (DPPP), 1,1'-bis(diphenylphosphino)ferrocene (DPPF), and 2,2'-bis(diphenylphosphino)-1,1'-binaphthyl (BINAP).

The average particle diameter of the metal fine particles is preferably 1 nm to 100 nm. The average particle diameter of the metal fine particles of 100 nm or less provides a less decrease in the surface areas thereof and can thereby obtain sufficient catalytic activity. The average particle diameter is more preferably 75 nm or less and particularly preferably 1 nm to 30 nm.

The hyperbranched polymer (a) is preferably used for the primer of the present invention in an amount of 50 parts by mass to 2,000 parts by mass relative to 100 parts by mass of the metal fine particles (b). The amount of 50 parts by mass or more can cause the metal fine particles to be sufficiently dispersed. The amount of 2,000 parts by mass or less can reduce disadvantages of properties caused by an increase in the organic content. The amount of the hyperbranched polymer is more preferably 100 parts by mass to 1,000 parts by mass.

### <(c) Resin primer for electroless plating>

The resin primer used for the primer of the present invention is any resin primer that improves adhesion between a metal plating film and a base material to be plated and is for use in electroless plating.

Preferred examples of the primer for electroless plating for use in the primer of the present invention include acrylic resin primers, acrylic/silicone resin primers, acrylic/urethane resin primers, polyester resin primers, fluorine-based resin primers, epoxy resin primers, and polyurethane resin primers, and more preferred examples thereof include acrylic/silicone resin primers, acrylic/urethane resin primers, polyester resin primers, and polyurethane resin primers.

Examples of the acrylic resin primers include poly((meth)acrylic acid) and copolymers thereof, poly(meth)acrylates and copolymers thereof, urethane-(meth)acrylic acid copolymer (or urethane-modified (meth)acrylic resin), styrene-(meth)acrylic acid copolymer, and resins obtained by modifying these resins with an alkyd resin, an epoxy resin, a phenol resin, or the like. In the present specification, (meth)acrylic acid indicates both acrylic acid and methacrylic acid, and (meth)acrylate indicates both acrylate and methacrylate, for example.

Examples of the acrylic/silicone resin primers include resin primers obtained by complexing, copolymerizing (meth)acrylate and silicone, or crosslinking (meth)acrylate and silicone with another crosslinking agent, or resin primers obtained by crosslinking (meth)acrylate and silicone using a cross linking agent containing (meth)acrylate or silicone.

Examples of the (meth)acrylate component of an acrylic/silicone resin include alkyl (meth)acrylate monomers such as methyl (meth)acrylate, hydroxy group-containing (meth)acrylate monomers such as 2-hydroxyethyl (meth)acrylate, ethylenic unsaturated carboxylic acid monomers such as (meth)acrylic acid, (meth)acrylate monomers containing an amide group or a glycidyl group, and oligomers or polymers containing these monomers. These (meth)acrylate components may be used alone, or two or more (meth)acrylate components may be used in combination.

Examples of the silicone component of the acrylic/silicone resin include alkoxysilanes such as triethoxy(methyl)silane, diethoxydimethylsilane, diethoxy(methyl)(phenyl)silane, and 3-(glycidyloxy)propyltrimethoxysilane and hydrolysates or condensates thereof. These silicone components may be used alone, or two or more silicone components may be used in combination.

Examples of the acrylic/urethane resin primers include a two-liquid curing type acrylic/urethane resin and a thermoplastic acrylic/urethane resin.

The two-liquid curing type acrylic/urethane resin is a urethane resin with an acrylic polyol as a primary agent and with a polyisocyanate as a crosslinking agent (a hardener).

Examples of the acrylic polyol include (methyl (meth)acrylate)-(2-hydroxyethyl (meth)acrylate) copolymers, (octyl (meth)acrylate)-(ethylhexyl (meth)acrylate)-(2-hydroxyethyl (meth)acrylate) copolymers, and (methyl (meth)acrylate)-(butyl (meth)acrylate)-(2-hydroxyethyl (meth)acrylate)-styrene copolymers. These acrylic polyols may be used alone, or two or more acrylic polyols may be used in combination.

Examples of the polyisocyanate include aromatic isocyanates such as 2,4-tolylene diisocyanate, xylene diisocyanate (xylylene diisocyanate), 4,4'-diphenylmethane diisocyanate; aliphatic (including alicyclic) isocyanates such as 1,6-hexamethylene diisocyanate, isophorone diisocyanate, hydrogenated tolylene diisocyanate, and hydrogenated diphenylmethane diisocyanate; and adducts or multimers of the above various kinds of isocyanates such as tolylene diisocyanate adducts and tolylene diisocyanate trimer. These polyisocyanates may be used alone, or two or more polyisocyanates may be used in combination.

Examples of the thermoplastic acrylic/urethane resins include linear polymers obtained by urethane-bonding a divalent acrylic polyol and a divalent isocyanate.

The polyester resin primer is any polymer containing an ester bond obtained by polycondensation from a polycarboxylic acid and a polyol.

Examples of the polycarboxylic acid include terephthalic acid, isophthalic acid, phthalic acid, 2,6-naphthalene dicarboxylic acid, adipic acid, azelaic acid, sebacic acid, dodecanoic diacid, tetradecanoic diacid, and 1,4-cyclohexane dicarboxylic acid. These polycarboxylic acids may be used alone, or two or more polycarboxylic acids may be used in combination.

Examples of the polyol include ethylene glycol, 1,3-propanediol, 1,4-butanediol, 1,5-pentanediol, neopentyl glycol, 1,6-hexanediol, 1,4-cyclohexanedimethanol, 2-butyl-2-ethyl-1,3-propanediol, 1,10-decanediol, and bisphenol A. These polyols may be used alone, or two or more polyols may be used in combination.

The fluorine-based resin primer is any resin having a fluorine atom, and examples thereof include solvent-dissolvable resins such as a fluorine-containing acrylic resin, a fluorine-containing urethane resin, and a fluorine-containing silicone resins.

The epoxy resin primer is any resin having an epoxy group, and examples thereof include fire retardant epoxy resins such as an epichlorohydrin-bisphenol A epoxy resin, an epichlorohydrin-bisphenol F epoxy resin, and a tetrabromobisphenol A glycidyl ether, a novolak epoxy resin, a hydrogenated bisphenol A epoxy resin, a propylene oxide-added bisphenol A glycidyl ether epoxy resin, a p-oxybenzoic acid glycidyl ether ester epoxy resin, a m-aminophenol epoxy resin, a diaminodiphenylmethane epoxy resin, a urethane-modified epoxy resin, various kinds of alicyclic epoxy resins, an N,N-diglycidyl aniline, an N,N-diglycidyl-o-toluidine, triglycidyl isocyanurate, a poly(alkylene glycol) diglycidyl ether, glycidyl ethers of polyols such as glycerin, a hydantoin epoxy resin, and epoxides of unsaturated polymers such as a petroleum resin.

The polyurethane resin primer is any primer obtained by copolymerizing monomers with a urethane bond formed by the condensation of an isocyanate group and an alcohol group. Specific examples thereof include a urethane resin and a urethane urea resin.

The urethane resin is obtained by performing a urethanization reaction on a polymer polyol and an organic diisocyanate, which are known, in concurrent use of a solvent or a catalyst as needed. Examples of the urethane resin include a reactant of a polyester polyol derived by the polycondensation of a dicarboxylic acid and a low molecular weight diol and an organic diisocyanate, a reactant of a polyether polyol derived with alkylene oxides or the like and a polyamine as initiators and an organic diisocyanate, and a reactant of a polycarbonate diol derived by the polycondensation of a low molecular weight diol and ethylene carbonate or diethyl carbonate and an organic diisocyanate.

The urethane urea resin is obtained by what is called the prepolymer process, in which a polymer polyol and an organic diisocyanate which are known are reacted to obtain a isocyanate group-terminated urethane prepolymer, and the resultant prepolymer, a diamine (a chain extender) and a hydroxy group-containing monoamine (a terminal blocking agent) are reacted.

Examples of the resin primer for electroless plating include Rustless (registered trademark) Primer, Quick-Drying Chassis, Super Primer Surfacer (registered trademark), Aruko SP Primer, Ceran Primer, Mild Primer No. 700FA, Stark E Primer, Stark E Primer 1 Liquid type Quick-Drying α, Natoco Primer Surfacer, Lacquer Primer, Z Primer, Primer Surfacer Ace, High-Merit Primer No. 200, No, 100, No. 300, and No. 500, Acryst (registered trademark) Primer Quick-Drying NTX, Primer Quick-Drying M, and Tough Primer SP777 [manufactured by Natoco Co., Ltd.]; Cyclone 999 Primer, Bar-site Clean Primer, Unit Primer, SP Lacquer Primer, Uretax Quick-Drying Primer Surfacer Gray No. 130, Sellgiinpate, GC Coat, GC Coat #20 and #35, ST Lacquer Sanding Sealer #24, Primer for Foaming Polystyrene, 302 Undercoat (modified), SP Tightly Adhering Multi Binder, Cyclone EP-13 Primer, Cyclone MS-10-F Primer, Cyclone PC-1 Primer, Cyclone AC-110 Primer, Epoxite #80, PU500 Primer No. 22, HM-30 Primer, HM-60 Primer, HM-80 Primer, and MU-90 Non-sanding type Primer (modified) [manufactured by Saito Paint Co., Ltd.]; Bonde (registered trademark) 88, 88 High Solid Type, and 8312, Prominence 2, and P961L [manufactured by Mikasa Paint Co., Ltd.]; Edobosei EB, Edobosei EBM, New Edobo, and Epo Lite Primer Surfacer [manufactured by Edogawa Gosei Co., Ltd.]; Orgaeco (registered trademark) Primer Surfacer, Nippe (registered trademark) Powerbind (registered trademark), Nippe (registered trademark) Powerbind (registered trademark) Next, Unigrand (registered trademark) E Smile, Prarouge One-Liquid Base, Prarouge Two-Liquid Base, and Prarouge Two-Liquid Primer [manufactured by Nippon Paint Co., Ltd.]; NO. 3000 Sammera HV Surfacer, Sammera Fine NC Primer Surfacer, No. 3000 Sammera EP Primer Surfacer, Kapuron 2000 and 2500, Universal GC Eco Primer, Universal NC Primer, Universal Sealer, and Universal ZAP [manufactured by AS Paint Co., Ltd.]; Excel Primer and Super Excel Primer [manufactured by Higashi Nippon Toryo Co., Ltd.]; SK Clear Sealer, SK Water based Elastic Sealer, SK #1000 Primer, and SK #2000 Primer [manufactured by SK Kaken Co., Ltd.]; Miccyakuron (registered trademark) AB·X, Miccyakuron (registered trademark) Multi, and Somay-Q Primer [manufactured by Somay-Q Technology Corporation]; Super X series, Primer PP-7F, Primer MP-1000, Primer MP-2000, Silicone Primer D3, and PPX set [manufactured by Cemedine Co., Ltd.]; KAR Plastic Primer (NE) and KAR Plastic Primer Clear White [manufactured by Kansai Paint Co., Ltd.]; FB Primer, Iron Primer, Aqua Mighty Primer, and Arona Super Primer [manufactured by Dai Nippon Toryo Co., Ltd]; Pla-Ace (registered trademark) BS716, K716, RD716-NX, and RD716-NXE, Hai Urex (registered trademark) P P79, P NP79, P UNP79, P Grande Bonheur GPX79, and P Bonheur Tone KNP79, Nytec NY79, Neo Urex NW79, Ultra Shine S79, Sunshine MH62 Super, Aquaco Pla-Ace AQ-PA13, Aquaco Hai Urex P AQ-PB11, Aquaco Rylcon AQ-MA21, Rylcon (registered trademark) B B20, Armor Top AT20, Neo Chakuron BC74, Wonder Tone (registered trademark) M M773, Hai Urex (registered trademark) M M79, Ultra Shine for Metals BS79, 855-(NH), Ultipa World 787, Super Primer 8954, Super Primer Mark 2 8951-KM, and Panuco (registered trademark) PA N894 [manufactured by Musashi Paint Co., Ltd.]; Acrydic (registered trademark) CL-1000 [manufactured by DIC Corporation]; Duranate (registered trademark) SBN-70D [manufactured by Asahi Kasei Chemicals Corporation]; Superflex (registered trademark) 500M, 620, and 650 [manufactured by DKS Co. Ltd.]; and Trixene Aqua BI220 [manufactured by Baxenden Chemicals Ltd.]. These resin primers for electroless plating may be used alone, or two or more resin primers for electroless plating may be used in combination.

The resin primer for electroless plating (c) is preferably used for the primer of the present invention in an amount of 10 to 5,000 parts by mass relative to 100 parts by mass of a complex formed of the hyperbranched polymer and the metal fine particles described below. If the amount is 10 parts by mass or more, more superior base material adhesion can be obtained. If the amount is 5,000 parts or less, more superior platability can be obtained. The amount is more preferably 100 parts by mass to 2,000 parts by mass.

### <Primer>

The primer of the present invention comprises the hyperbranched polymer (a) having an ammonium group at a molecular terminal, the metal fine particles (b), and the resin primer for electroless plating (c), in which the hyperbranched polymer and the metal fine particles preferably form a complex.

As used herein, the term complex means the hyperbranched polymer and the metal fine particles coexist in the state of the hyperbranched polymer being in contact with or in proximity to the metal fine particles to form a particle due to the effect of the ammonium group at the terminal of the hyperbranched polymer. In other words, the complex has a structure in which the ammonium group of the hyperbranched polymer is attached to or coordinates with the metal fine particle.

Accordingly, the "complex" in the present invention includes a complex in which the metal fine particles and the hyperbranched polymer are bound to form a discrete complex as well as a complex in which the metal fine particles and the hyperbranched polymer exist independently without forming bonds.

The formation of a complex of the hyperbranched polymer having an ammonium group and the metal fine particles is performed concurrently with the preparation of the primer comprising the hyperbranched polymer and the metal fine particles. Examples of the method include a method in which metal fine particles stabilized to a certain degree with a lower ammonium ligand are produced and the ligand is exchanged with the hyperbranched polymer and a method in which a metal ion is directly reduced in a solution of the hyperbranched polymer having an ammonium group to form a complex. Further examples thereof include a method in which an aqueous solution of a metal salt is added to a solution of the hyperbranched polymer and the resultant mixture is irradiated with ultraviolet light or a method in which an aqueous solution of a metal salt and a reducing agent are added to the solution of the hyperbranched polymer to reduce the metal ion to form a complex.

In the ligand exchange method, the raw material that is metal fine particles stabilized to a certain degree with a lower ammonium ligand can be produced by the method described in Journal of Organometallic Chemistry 1996, 520, 143 to 162, and the like. A hyperbranched polymer having an ammonium group is dissolved in the resultant reaction mixture of the metal fine particles, and the mixture is stirred at room temperature (approximately 25°C) or stirred with heating to obtain the intended metal fine particle complex.

Any solvent may be used, provided the solvent is capable of dissolving the metal fine particles and the hyperbranched polymer having an ammonium group to the necessary concentrations or higher. Specific examples thereof include alcohols such as ethanol, n-propanol, and isopropyl alcohol; halogenated hydrocarbons such as methylene chloride and chloroform; cyclic ethers such as tetrahydrofuran (THF), 2-methyltetrahydrofuran, and tetrahydropyran; nitriles such as acetonitrile and butyronitrile, and a mixture of these. Preferably, tetrahydrofuran is used.

The temperature at which the reaction mixture of the metal fine particles and the hyperbranched polymer having an ammonium group are mixed may be generally from 0°C to the boiling point of the solvent, and preferably in a range of room temperature (approximately 25°C) to 60°C.

In the ligand exchange method, a phosphine dispersant (phosphine ligand) may be used instead of the amine dispersant (lower ammonium ligand) to stabilize metal fine particles to a certain degree beforehand.

The direct reduction method involves dissolving a metal ion and a hyperbranched polymer having an ammonium group in a solvent and reduction is performed with a primary or secondary alcohol such as methanol, ethanol, isopropyl alcohol, and polyols to obtain the intended metal fine particle complex.

The source of the metal ion used includes the above described metal salts.

Any solvent may be used, provided the solvent is capable of dissolving the metal ion and the hyperbranched polymer having an ammonium group to the necessary concentrations or higher. Specific examples thereof include alcohols such as methanol, ethanol, propanol, and isopropyl alcohol; halogenated hydrocarbons such as methylene chloride and chloroform; cyclic ethers such as tetrahydrofuran (THF), 2-methyltetrahydrofuran, and tetrahydropyran; nitriles such as acetonitrile and butyronitrile, amides such as N,N-dimethylformamide (DMF) and N-methyl-2-pyrrolidone (NMP); sulfoxides such as dimethylsulfoxide; and mixed solutions of these solvents. Preferably, alcohols, halogenated hydrocarbons, and cyclic ethers are used. More preferably, ethanol, isopropyl alcohol, chloroform, tetrahydrofuran, and the like are used.

The temperature for the reduction reaction can be generally within the range of 0°C to the boiling point of the solvents and is preferably within the range of room temperature (approximately 25°C) to 60°C.

As the other direct reduction method, by dissolving a metal ion and a hyperbranched polymer having an ammonium group in a solvent to be reacted under hydrogen atmosphere, the intended metal fine particle complex can be obtained.

The source of the metal ion used includes the above described metal salts and metal carbonyl complexes such as hexacarbonylchromium [Cr(CO)₆], pentacarbonyliron [Fe(CO)₅], octacarbonyldicobalt [Co₂(CO)₈], and tetracarbonylnickel [Ni(CO)₄]. Zero-valent metal complexes such as metal olefin complexes, metal phosphine complexes, and metal nitrogen complexes may also be used.

Any solvent may be used, provided the solvent is capable of dissolving the metal ion and the hyperbranched polymer having an ammonium group to the necessary concentrations or higher. Specific examples thereof include alcohols such as ethanol and propanol; halogenated hydrocarbons such as methylene chloride and chloroform; cyclic ethers such as tetrahydrofuran, 2-methyltetrahydrofuran, and tetrahydropyran; nitriles such as acetonitrile and butyronitrile, and a mixture thereof these. Preferably, tetrahydrofuran is used.

The temperature at which the metal ion and the hyperbranched polymer having an ammonium group are mixed may be generally from 0°C to the boiling point of the solvent.

As the direct reduction method, a metal ion and a hyperbranched polymer having an ammonium group may also be dissolved in a solvent and subjected to thermal decomposition to obtain the intended metal fine particle complex.

The source of the metal ion used includes the above described metal salts, metal complexes such as metal carbonyl complexes and other zero-valent metal complexes, and metal oxides such as silver oxide.

Any solvent may be used, provided the solvent is capable of dissolving the metal ion and the hyperbranched polymer having an ammonium group to the necessary concentrations or higher. Specific examples thereof include alcohols such as methanol, ethanol, n-propanol, isopropyl alcohol, and ethylene glycol; halogenated hydrocarbons such as methylene chloride and chloroform; cyclic ethers such as tetrahydrofuran (THF), 2-methyltetrahydrofuran, and tetrahydropyran; nitriles such as acetonitrile and butyronitrile; aromatic hydrocarbons such as benzene and toluene, and a mixture of these. Preferably, toluene is used

The temperature at which the metal ion and the hyperbranched polymer having an ammonium group are mixed may be generally from 0°C to the boiling point of the solvent. The temperature is preferably close to the boiling point of the solvent, for example, 110°C (heating at reflux) in the case of toluene.

The thus-obtained complex of the hyperbranched polymer having an ammonium group and the metal fine particles may be subjected to purification such as reprecipitation and processed into a solid form such as powder.

The primer of the present invention may be in the form of varnish that comprises the hyperbranched polymer (a) having an ammonium group, the metal fine particles (b) (preferably a complex formed therefrom), and the resin primer for electroless plating (c) and that is used for forming [a priming layer for electroless plating] as described below.

### <Thickeners>

The primer of the present invention contains thickeners as needed, thereby enabling the viscosity and rheological characteristics of the primer to be adjusted. The addition of the thickeners therefore serves a particularly important role when the primer of the present invention is used as printing ink.

Examples of the thickeners include poly(acrylic acid)s (including cross-linked ones) such as carboxyvinyl polymers (carbomers); vinyl polymers such as a poly(vinyl pyrrolidone) (PVP), a poly(vinyl alcohol) (PVA), a poly(vinyl acetate) (PVAc) and a polystyrene (PS); poly(ethylene oxide)s; polyesters; polycarbonates; polyamides; polyurethanes; polysaccharides such as dextrin, agar, carrageenan, alginic acid, gum arabic, guar gum, gum traganth, locust bean gum, starch, pectin, carboxymethyl cellulose, hydroxyethyl cellulose, and hydroxypropyl cellulose; and proteins such as gelatin and casein. The polymers include not only homopolymers but also copolymers. These thickeners may be used alone, or two or more thickeners may be used in combination.

### <Other additives>

The primer of the present invention may further appropriately contain additives such as surfactants and various kinds of surface conditioners to an extent that the effect of the present invention is not impaired.

Examples of the surfactants include polyoxyethylene alkyl ethers such as a polyoxyethylene lauryl ether, a polyoxyethylene stearyl ether, a polyoxyethylene cetyl ether, and a polyoxyethylene oleyl ether; polyoxyethylene alkylaryl ethers such as a polyoxyethylene octylphenyl ether and a polyoxyethylene nonylphenyl ether; polyoxyethylene-polyoxypropylene block copolymers; sorbitan fatty acid esters such as a sorbitan monolaurate, a sorbitan monopalmitate, a sorbitan monostearate, a sorbitan monooleate, a sorbitan tristearate, and a sorbitan trioleate; polyoxyethylene nonionic surfactants such as a polyoxyethylene sorbitan monolaurate, a polyoxyethylene sorbitan monopalmitate, a polyoxyethylene sorbitan monostearate, and a polyoxyethylene sorbitan trioleate; fluorine-based surfactants such as EFTOP (registered trademark) EF-301, EF-303, and EF-352 [manufactured by Mitsubishi Materials Electronic Chemicals Co., Ltd.], MEGAFAC (registered trademark) F-171, F-173, R-08, and R-30 (manufactured by DIC Corporation), Novec (registered trademark) FC-430 and FC-431 [manufactured by Sumitomo 3M Ltd.], ASAHI GUARD (registered trademark) AG-710 [manufactured by Asahi Glass Co., Ltd.], and SURFLON (registered trademark) S-382 [manufactured by AGC Seimi Chemical Co., Ltd.].

Examples of the surface conditioners include silicone-based leveling agents such as Shin-Etsu Silicone (registered trademark) KP-341 [manufacture by Shin-Etsu Chemical Co., Ltd.]; and silicone-based surface conditioners such as BYK (registered trademark) -302, 307, 322, 323, 330, 333, 370, 375, and 378 [manufactured by BYK Japan KK].

These additives may be used alone, or two or more additives may be used in combination. The additives are used in an amount of preferably 0.001 part by mass to 50 parts by mass, more preferably 0.005 part by mass to 10 parts by mass, and even more preferably 0.01 part by mass to 5 parts by mass relative to 100 parts by mass of the complex formed of the hyperbranched polymer and the metal fine particles.

### [Priming layer for electroless plating]

The primer of the present invention may be applied on a base material to form a priming layer for electroless plating. The present invention is also directed to the priming layer for electroless plating.

The base material is not specifically limited, and a nonconducting base material or a conducting base material may be preferably used.

Examples of the nonconducting base material include glass, ceramics; a polyethylene resin, a polypropylene resin, a vinyl chloride resin, a nylon (polyamide resin), a polyimide resin, a polycarbonate resin, a acrylic resin, a PEN (poly(ethylene naphthalate)) resin, a PET (poly(ethylene terephthalate)) resin, a PEEK (polyether ether ketone) resin, an ABS (acrylonitrile-butadiene-styrene copolymer) resin, an epoxy resin, and a polyacetal resin; and paper. The nonconducting base material is suitably used in the form of sheet, film, or the like, and the thickness is not specifically limited.

Examples of the conducting base material include metals such as ITO (tin-doped indium oxide), ATO (antimony-doped tin oxide), FTO (fluorine-doped tin oxide), AZO (aluminum-doped zinc oxide), GZO (gallium-doped zinc oxide), various stainless steels, aluminum and aluminum alloys such as duralumin, iron and iron alloys, copper and copper alloys such as brass, phosphor bronze, cupronickel, and beryllium copper, nickel and nickel alloys, and silver and silver alloys such as nickel silver.

Furthermore, a base material is also usable in which a thin film of any of these conducting base material is formed on the nonconducting base material.

The base material may also be a three-dimensional molded body.

The specific method to form a priming layer for electroless plating from the primer comprising the hyperbranched polymer having an ammonium group, the metal fine particles, and the resin primer for electroless plating involves dissolving or dispersing the hyperbranched polymer having an ammonium group, the metal fine particles (preferably a complex formed therefrom), and the resin primer for electroless plating in a suitable solvent to form a varnish, coating a base material on which a metal plating coating film is to be formed with the varnish by spin coating; blade coating; dip coating; roll coating; bar coating; die coating; spray coating; ink jet method; pen lithography such as fountain-pen nanolithography (FPN) and dip-pen nanolithography (DPN); relief printing such as letterpress printing, flexography, resin relief printing, contact printing, microcontact printing (µCP), nanoimprinting lithography (NIL), and nanotransfer printing (nTP); intaglio printing such as gravure printing and engraving; planographic printing; stencil printing such as screen printing and mimeograph; offset printing; or the like and evaporating the solvent to be dried to form a thin layer.

Among these coating methods, spin coating, spray coating, ink jet method, pen lithography, contact printing, µCP, NIL, and nTP are preferred. Spin coating has advantages in that a highly volatile solution can be used because a short time is needed for coating and that a highly uniform coating can be obtained. Spray coating needs only a very small amount of vanish to obtain a highly uniform coating, which is very advantageous for industrial production. Ink jet method, pen lithography, contact printing, µCP, NIL, and nTP can form (draw), for example, fine patterns of wiring efficiently, which is very advantageous for industrial production.

Any solvent can be used, provided the solvent dissolves or disperses the complex and the resin primer for electroless primer, and examples thereof include water; aromatic hydrocarbons such as benzene, toluene, xylene, ethylbenzene, chlorobenzene, and dichlorobenzene; alcohols such as methanol, ethanol, n-propanol, isopropyl alcohol, n-butanol, 2-butanol, n-hexanol, n-octanol, 2-octanol, and 2-ethylhexanol; cellosolves such as methylcellosolve, ethylcellosolve, butylcellosolve, and phenylcellosolve; glycol ethers such as propylene glycol monomethyl ether (PGME), propylene glycol monoethyl ether, propylene glycol monobutyl ether, diethylene glycol monomethyl ether, diethylene glycol monobutyl ether, dipropylene glycol monomethyl ether, triethylene glycol monomethyl ether, tripropylene glycol monomethyl ether, ethylene glycol dimethyl ether, propylene glycol dimethyl ether, diethylene glycol dimethyl ether, diethylene glycol diethyl ether, diethylene glycol dibutyl ether, diethylene glycol ethyl methyl ether, diethylene glycol butyl methyl ether, diethylene glycol isopropyl methyl ether, dipropylene glycol dimethyl ether, triethylene glycol dimethyl ether, and tripropylene glycol dimethyl ether; glycol esters such as ethylene glycol monomethyl ether acetate, and propylene glycol monomethyl ether acetate (PGMEA); ethers such as tetrahydrofuran (THF), methyltetrahydrofuran, 1,4-dioxane, and diethyl ether; esters such as ethyl acetate and butyl acetate; ketones such as acetone, methyl ethyl ketone (MEK), methyl isobutyl ketone (MIBK), cyclopentanone, cyclohexanone, and diacetone alcohol; aliphatic hydrocarbons such as n-heptane, n-hexane, and cyclohexane; halogenated aliphatic hydrocarbons such as 1,2-dichloroethane and chloroform; amides such as N-methyl-2-pyrrolidone (NMP), N,N-dimethylformamide (DMF), and N,N-dimethylacetamide; and dimethyl sulfoxide. These solvents may be used alone, or two or more solvents may he mixed. Further, glycols such as ethylene glycol, propylene glycol, and butylene glycol may be added to adjust the viscosity of the varnish. For the solvent, solvents commercially available as thinners for resin primers for electroless plating may be used.

Although the concentration of the complex dissolved or dispersed in the solvent is not limited, the concentration of the complex in the varnish is 0.05% by mass to 90% by mass and preferably 0.1% by mass to 80% by mass.

The method for drying the solvent is not specifically limited, and, for example, a hotplate or an oven can be used to evaporate the solvent under an appropriate atmosphere, i.e., air, inert gas such as nitrogen, or vacuum. This can provide a priming layer having a uniformly formed film surface. The baking temperature is not specifically limited, provided the solvent can be evaporated, and a temperature of 40°C to 250°C is preferably used.

### [Electroless plating process, metal plating film, metal-coated base material]

The thus-obtained priming layer for electroless plating formed on the base material is subjected to electroless plating to form a metal plating film on the priming layer for electroless plating. The present invention is also directed to the thus-obtained metal plating film as well as the metal-coated base material comprising a base material, a priming layer for electroless plating, and a metal plating film in this order.

Electroless plating process (step) is not specifically limited, and any commonly known electroless plating process may be used. For example, the common method involves using a commonly known electroless plating solution and immersing a priming layer for electroless plating formed on the base material in the plating solution (bath).

The electroless plating solution mainly contains a metal ion (a metal salt), a complexing agent, and a reducing agent and contains a pH adjusting agent, a pH buffering agent, a reaction accelerator (a second complexing agent), a stabilizer, a surfactant (for, for example, giving a luster to the plating film and improving wettability of the surface to be treated), and other agents as appropriate depending on the application.

Examples of the metal for use in the metal plating film formed by electroless plating include iron, cobalt, nickel, copper, palladium, silver, tin, platinum, gold, and alloys of these. The metal is suitably selected depending on the purpose.

The complexing agent and the reducing agent may be suitably selected depending on the metal ion.

Alternatively, a commercially available electroless plating solution may be used, and preferred examples thereof include electroless nickel plating agent (Melplate (registered trademark) NI series) and electroless copper plating agent (Melplate (registered trademark) CU series) manufactured by Meltex Inc.; electroless nickel plating solution (ICP Nicoron (registered trademark) series, Toppiena 650), electroless copper plating solution (OPC-700 electroless copper M-K, ATS Addcopper IW and CT, OPC Copper (registered trademark) AF series, HFS, and NCA), electroless tin plating solution (Substar SN-5), electroless gold plating solution (Flash Gold 330, Self Gold OTK-IT), and electroless silver plating solution (Muden Silver) manufactured by Okuno Chemical Industries Co., Ltd.; electroless palladium plating solution (Pallet II) and electroless gold plating solution (Dip G series, NC Gold series) manufactured by Kojima Chemicals Co., Ltd.; electroless silver plating solution (S-DIA AG-40) manufactured by Sasaki Chemical Co., Ltd.; electroless nickel plating solution (Sumer (registered trademark) series, Sumer (registered trademark) Kaniblack (registered trademark) series), and electroless palladium plating solution (S-KPD) manufactured by Japan Kanigen Co., Ltd.; electroless copper plating solution (Cuposit (registered trademark) Copper Mix series and Circuposit (registered trademark) series), electroless palladium plating solution (Pallamerse series), electroless nickel plating solution (Duraposit (registered trademark) series), electroless gold plating solution (Aurolectroless series), and electroless tin plating solution (Tinposit (registered trademark) series) manufactured by The Dow Chemical Company; electroless copper plating solution (Thru-Cup (registered trademark) ELC-SP, PSY, PCY, PGT, PSR, PEA, and PMK) manufactured by C. Uyemura & Co., Ltd.); and electroless copper plating solution (Printgant (registered trademark) PV and PVE) manufactured by Atotech Japan.

In the electroless plating process, temperature of the plating bath, pH of the plating bath, immersion time, concentration of metal ion, the presence or absence of stirring and stirring speed, the presence or absence of feeding of air or oxygen and feeding speed may be adjusted to control the forming speed of a metal coating film and the thickness of the film.

### Examples

The present invention will be described more specifically with reference to Examples, which are not intended to limit the present invention. In Examples, physical properties of the samples were measured by using the following instruments under the following conditions.

### (1) Gel permeation chromatography (GPC)

Instrument: HLC-8220GPC manufactured by Tosoh Corporation
Column: Shodex (registered trademark) GPC KF-804L and KF-803L manufactured by Showa Denko K.K.
Column temperature: 40°C
Solvent: tetrahydrofuran
Detector: UV (254 nm), RI

### (2) ¹H NMR spectra

Instrument: JNM-L400 manufactured by JEOL Ltd.
Solvent: CDCl₃
Reference peak: tetramethylsilane (0.00 ppm)

### (3) ¹³C NMR spectra

Instrument: JNM-ECA700 manufactured by JEOL Ltd.
Solvent: CDCl₃
Relaxation reagent: chromium trisacetylacetonate (Cr(acac)₃)
Reference peak: CDCl₃ (77.0 ppm)

### (4) Inductively coupled plasma atomic emission spectroscopy (ICP atomic emission spectroscopy)

Instrument: ICPM-8500 manufactured by Shimadzu Corporation

### (5) Transmission electron microscope (TEM) image

Instrument: H-8000 manufactured by Hitachi High-Technologies Corporation

Abbreviations used are as follows:
HPS: hyperbranched polystyrene [Hypertec (registered trademark) HPS-200 manufactured by Nissan Chemical Industries, Ltd.]
Acrylic: acrylic substrate
ABS: acrylonitrile-butadiene-styrene copolymer substrate
PC: polycarbonate substrate
PET: poly(ethylene terephthalate) film [Lumirror (registered trademark) T60 manufactured by Toray Industries Inc.]
PI: polyimide film [Kapton (registered trademark) 200H manufactured by Du Pont-Toray Co., Ltd.]
PR-A: acrylic/silicone resin primer primary agent [Super Primer Clear 89540, solid content concentration: 25% by mass to 30% by mass manufactured by Musashi Paint Co., Ltd.]
PR-B: acrylic/urethane resin primer primary agent [Super Primer Mark 2 Clear 89510KMA manufactured by Musashi Paint Co., Ltd.]
PR-C: polyester resin primer primary agent [Panuco (registered trademark) PA Matte Clear N89400 manufactured by Musashi Paint Co., Ltd.]
PR-D: polyhydroxy acrylic resin [Acrydic (registered trademark) CL-1000 manufactured by DIC Corporation]
PR-E: polyurethane resin [Superflex (registered trademark) 650, solid content concentration: 25% by mass to 27% by mass manufactured by DKS Co. Ltd.]
HA-A: resin primer hardener [Super Primer Mark 2 Hardener Z-8954NYUN, solid content concentration: 20% by mass to 25% by mass manufactured by Musashi Paint Co., Ltd.]
HA-B: resin primer hardener [Super Primer Mark 2 Hardener Z-8954NYS, solid content concentration: 15% by mass to 20% by mass manufactured by Musashi Paint Co., Ltd.]
HA-C: resin primer hardener [Panuco (registered trademark) PA Hardener Z-H-430, solid content concentration: 15% by mass to 20% by mass manufactured by Musashi Paint Co., Ltd.]
HA-D: blocked polyisocyanate [Duranate (registered trademark) SBN-70D manufactured by Asahi Kasei Chemicals Corporation]
HA-E: blocked polyisocyanate [Trixene Aqua BI220, solid content concentration: 40% by mass manufactured by Baxenden Chemicals Ltd.]
TH-C: resin primer thinner [Panuco (registered trademark) PA Thinner Z-L165 manufactured by Musashi Paint Co., Ltd.]
DAA: diacetone alcohol
EtOH: ethanol
IPA: isopropyl alcohol
IPE: diisopropyl ether
PrOH: n-propanol
MEK: methyl ethyl ketone

### [Synthesis Example 1] Production of HPS-Cl

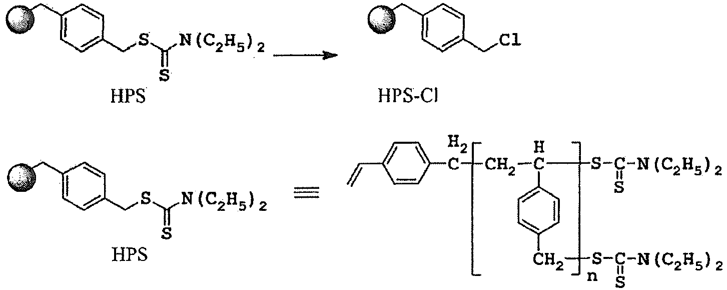

A 500mL reaction flask was charged with 27 g of sulfuryl chloride [manufactured by KISHIDA CHEMICAL CO., LTD.] and 50 g of chloroform, and the mixture was stirred until uniformly dissolved. This solution was cooled to 0°C under nitrogen stream.

Another 300mL reaction flask was charged with 15 g of a hyperbranched polymer HPS having a dithiocarbamate group at a molecular terminal and 150 g of chloroform, and the mixture was stirred under nitrogen stream until uniform.

The HPS/ chloroform solution was added with a feeding pump from the 300 mL reaction flask to the sulfuryl chloride/ chloroform solution cooled to 0°C under nitrogen stream over 60 minutes such that the temperature of the reaction liquid was from -5 to 5°C. After the addition was completed, the reaction liquid was stirred for 6 hours while the temperature was kept at -5°C to 5°C.

A solution in which 16 g of cyclohexene [manufactured by Tokyo Chemical Industry Co., Ltd.] had been dissolved in 50 g of chloroform was added to this reaction liquid such that the temperature of the reaction liquid was from -5°C to 5°C. After the addition was completed, this reaction liquid was added to 1,200 g of IPA to precipitate the polymer. This precipitate was filtered to collect a white powder, which was dissolved in 100 g of chloroform. The liquid was added to 500 g of IPA to reprecipitate the polymer. This precipitate was filtered under reduced pressure and vacuum-dried to obtain 8.5 g of a hyperbranched polymer having a chlorine atom at a molecular terminal (HPS-Cl) as a white powder (yield 99%).

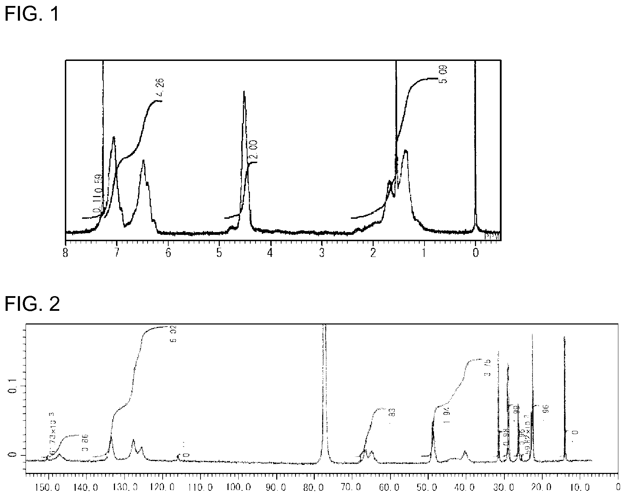

The ¹H NMR spectrum of the obtained HPS-Cl is illustrated in FIG. 1. Because the peaks assigned to the dithiocarbamate group (4.0 ppm, 3.7 ppm) disappeared, it was found that almost all the dithiocarbamate groups at the molecular terminals of the HPS were replaced with chlorine atoms in the obtained HPS-Cl. The obtained HPS-Cl had a weight-average molecular weight Mw in terms of polystyrene as measured by GPC of 14,000 and a degree of distribution Mw/Mn of 2.9.

### [Synthesis Example 2] Production of HPS-N(Me)₂OtCl

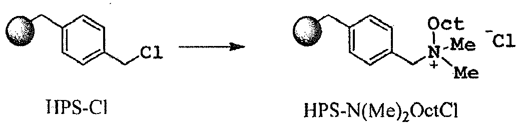

A 100 mL reaction flask equipped with a cooler was charged with 4.6 g (30 mmol) of HPS-Cl produced in Synthesis Example 1 and 15 g of chloroform, and the mixture was stirred until uniform. To this solution, a solution in which 5.0 g (31.5 mmol) of dimethyloctylamine [Farmin (registered trademark) DM0898 manufactured by Kao Corporation] had been dissolved in 7.5 g of chloroform was added, and 7.5 g of IPA was further added thereto. This mixture was stirred in a nitrogen atmosphere at 65°C for 40 hours.

After the mixture was cooled to a liquid temperature of 30°C, the solvent was distilled off. The resultant residue was dissolved in 60 g of chloroform, and this solution was added to 290 g of IPE for purification by reprecipitation. The precipitated polymer was filtered under reduced pressure and vacuum-dried at 50°C to obtain 9.3 g of a hyperbranched polymer having a dimethyloctylammonium group at a molecular terminal (HPS-N(Me)₂OctCl) as a white powder.

The ¹³C NMR spectrum of the obtained (HPS-N(Me)₂OctCl) is illustrated in FIG. 2. The peak of the benzene ring and the peak of the methyl group at the terminal of the octyl group revealed that the chlorine atoms at the molecular terminals of the HPS-Cl were replaced with ammonium groups substantially quantitatively in the obtained HPS-N(Me)₂OctCl. The weight-average molecular weight MW of HPS-N(Me)₂OctCl calculated from Mw (14,000) of HPS-Cl and the degree of introduction of ammonium group (100%) was 28,000.

### [Synthesis Example 3] Production of Pd[HPS-N(Me)₂OctCl]

A 500 mL reaction flask equipped with a cooler was charged with 4.6 g of palladium acetate [manufactured by Kawaken Fine Chemicals Co., Ltd.] and 100 g of chloroform, and the mixture was stirred until uniform. To this solution, a solution in which 5.0 g of HPS-N(Me)₂OctCl produced in Synthesis Example 2 had been dissolved in 100 g of chloroform was added with a dropping funnel. The inside of the dropping funnel was washed with 100 g of chloroform and 100 g of EtOH, which were added to the reaction flask. This mixture was stirred in a nitrogen atmosphere at 60°C for 14 hours.

After the mixture was cooled to a liquid temperature of 30°C, the solvent was distilled off. The resultant residue was dissolved in a mixed solution of 38 g of chloroform and 38 g of EtOH, and this solution was added to 750 g of IPE for purification by reprecipitation. The precipitated polymer was filtered under reduced pressure and vacuum-dried at 50°C to obtain 7.0 g of a complex of the hyperbranched polymer having an ammonium group at a molecular terminal and Pd particles (Pd[HPS-N(Me)₂OctCl]) as a black powder.

The result of ICP atomic emission spectroscopy showed that the Pd content of the obtained Pd[HPS-N(Me)₂OctCl] was 31% by mass. A TEM (transmission electron microscope) image indicated that the Pd particle diameter was approximately 2 nm to 4 nm.

### [Reference Example 1] Preparation of electroless nickel plating solution

A 1 L flask was charged with 50 mL of Melplate (registered trademark) NI-6522LF1 [manufactured by Meltex Inc.], 150 mL of Melplate (registered trademark) NI-6522LF2 [manufactured by Meltex Inc.], and 5 mL of Melplate (registered trademark) NI-6522LF Additive [manufactured by Meltex Inc.], and pure water was added to dilute the solution to a total volume of 1 L. To this solution, a 10 vol% sulphuric acid aqueous solution was added to adjust the pH of the solution to 4.6 to obtain the electroless nickel plating solution.

### [Reference Example 2] Preparation of electroless copper plating solution

A 1 L flask was charged with 600 mL of purified water, 100 mL of OPC Copper (registered trademark) AF-1 [manufactured by Okuno Chemical Industries Co., Ltd.], 150 mL of OPC Copper (registered trademark) AF-M [manufactured by Okuno Chemical Industries Co., Ltd.], and 40 mL of OPC Copper (registered trademark) AF-2 [manufactured by Okuno Chemical Industries Co., Ltd.], and purified water was further added thereto to make the total amount of the solution 1 L. To this solution, an approximately 10 vol% sulfuric acid aqueous solution was added to adjust the pH of the solution to be 9.5 and to form an electroless copper plating solution.

### [Reference Example 3] Preparation of Electroless Copper Plating Solution B

Using commercially available Printgant (registered trademark) PV [manufactured by Atotech Japan], an electroless copper plating solution was prepared as follows:
A 200 mL flask was charged with 178 mL of purified water, 15 mL of Basic Printgant V, 2 mL of Copper Solution Printgant VE, 1.2 mL of Starter Printgant PV, 0.2 mL of Stabilizer Printgant PV, 3.2 mL of Reducer Cu, and 0.52 g of NaOH, and the mixture was stirred and heated up to 40°C to form Electroless Copper Plating Solution B.

### [Examples 1 to 8]

0.06 g of Pd[HPS-N(Me)₂OctCl] produced in Synthesis Example 3 was dissolved in 1.94 g of each of the solvents listed in Table 1. To this solution, 2.00 g of each of the resin primer primary agents listed in Table 1 and 0.20 g of each of the resin primer hardeners listed in Table 1 were further added to prepare a primer for electroless plating.

The primer was spin-coated (200 rpm × 5 seconds and then 1,000 rpm × 30 seconds) on each of the base materials (50 mm × 50 mm) listed in Table 1. This base material was dried on a hot plate at 80°C for 30 minutes to obtain a base material having a priming layer on the whole top surface of the base material.

The obtained base material was immersed, for 3 minutes, in the electroless nickel plating solution prepared in Reference Example 1 heated at 80°C. The base material taken out therefrom was then washed with water and was dried on a hot plate at 80°C for 30 minutes to obtain a plated base material.

For the metal plating film on this plated base materials, film uniformity and base material adhesion were evaluated.

The film uniformity was visually evaluated in accordance with the following <Criteria for film uniformity>. For the base material adhesion, a piece of 18 mm-wide CELLOTAPE (registered trademark) [CT-18S manufactured by Nichiban Co., Ltd.] was applied to the metal plating film area on the obtained plated base material and was strongly rubbed against the base material with a finger to securely adhere, the stuck CELLOTAPE (registered trademark) was then peeled off at a time, and the state of the metal plating film was visually evaluated in accordance with the following criteria. Table 1 collectively lists the results.

### [Example 9]

0.80 g of PR-D as a resin primer primary agent and 0.16 g of HA-D as a resin primer hardener were dissolved in 7.0 g of MEK. A solution in which 0.10 g of Pd[HPS-N(Me)₂OctCl] produced in Synthesis Example 3 had been dissolved in 3 g of PrOH was added thereto to prepare a primer for electroless plating.

The primer was spin-coated (200 rpm × 5 seconds and then 1,000 rpm x 30 seconds) on PI (50 mm × 50 mm). This base material was dried on a hot plate at 110°C for 30 minutes to obtain a base material having a priming layer on the whole top surface of the base material.

The obtained base material was immersed, for 10 minutes, in the electroless copper plating solution prepared in Reference Example 2 heated at 60°C. The base material taken out therefrom was then washed with water and was dried on a hot plate at 120°C for 10 minutes to obtain a plated base material.

For the metal plating film on this plated base material, film uniformity and base material adhesion were evaluated similarly to Example 1. Table 1 collectively lists the results.

### [Example 10]

0.03 g of PR-E as a resin primer primary agent and 0.048 g of HA-E as a resin primer hardener were dissolved in 8.7 g of DAA. A solution in which 0.025 g of Pd[HPS-N(Me)₂OctCl] produced in Synthesis Example 3 had been dissolved in 1.2 g of DAA was added thereto to prepare a primer for electroless plating.

The primer was spin-coated (200 rpm × 5 seconds and then 2,000 rpm × 30 seconds) on PET (50 mm × 50 mm). This base material was dried on a hot plate at 120°C for 10 minutes to obtain a base material having a priming layer on the whole top surface of the base material.

The obtained base material was immersed, for 10 minutes, in Electroless Copper Plating Solution B prepared in Reference Example 3 heated at 40°C. The base material taken out therefrom was then washed with water and was dried on a hot plate at 120°C for 10 minutes to obtain a plated base material.

For the metal plating film on this plated base material, film uniformity and base material adhesion were evaluated similarly to Example 1. Table 1 collectively lists the results.

### <Criteria for film uniformity>

A: A metal plating film having metallic luster is precipitated on the whole top surface of a base material on which a priming layer is formed without nonuniformity.
B: Although the surface of a base material is covered, there is nonuniformity in luster.
C: A base material has some exposed parts and is not perfectly covered.

### <Criteria for film adhesion>

A: A metal plating film is not delaminated and adheres to a base material.
B: A metal plating film is partially delaminated.
C: Most of (approximately 50% or more) of a metal plating film is delaminated and attached to CELLOTAPE (registered trademark).

### [Comparative Examples 1 to 8]

2.00 g of each of the resin primer primary agents listed in Table 1 and 0.20 g of each of the resin primer hardeners listed in Table 1 were dissolved in 3.88 g of each of the solvents listed in Table 1 to prepare a resin primer varnish.

The varnish was spin-coated (200 rpm × 5 seconds and then 1,000 rpm × 30 seconds) on each of the base materials (50 mm × 50 mm) listed in Table 1. This base material was dried on a hot plate at 80°C for 30 minutes to obtain a base material having a resin primer layer on the whole top surface of the base material.

Next, on this base material, a varnish in which 0.06 g of Pd[HPS-N(Me)₂OctCl] produced in Synthesis Example 3 had been dissolved in 1.94 g of EtOH was spin-coated (200 rpm × 5 seconds and then 1,000 rpm × 30 seconds). This base material was dried on a hot plate at 80°C for 30 minutes to obtain a base material having Pd[HPS-N(Me)₂OctCl] on the whole top surface of the resin primer layer.

The obtained base material was immersed, for 3 minutes, in the electroless nickel plating solution prepared in Reference Example 1 heated at 80°C. The base material taken out therefrom was then washed with water and was dried on a hot plate at 80°C for 30 minutes to obtain a plated base material.

For the metal plating film on this plated base material, film uniformity and base material adhesion were evaluated similarly to Example 1. Table 1 collectively lists the results.

### [Comparative Example 9]

0.80 g of PR-D as a resin primer primary agent and 0.16 g of IIA-D as a resin primer hardener were dissolved in 7.0 g of MEK to prepare a resin primer varnish.

The varnish was spin-coated (200 rpm × 5 seconds and then 1,000 rpm × 30 seconds) on PI (50 mm × 50 mm). This base material was dried on a hot plate at 110°C for 30 minutes to obtain a base material having a resin primer layer on the whole top surface of the base material.

Next, on this base material, a varnish in which 0.10 g of Pd[HPS-N(Me)₂OctCl] produced in Synthesis Example 3 had been dissolved in 9.9 g of PrOH was spin-coated (200 rpm × 5 seconds and then 1,000 rpm × 30 seconds). This base material was dried on a hot plate at 110°C for 10 minutes to obtain a base material having Pd[HPS-N(Me)₂OctCl] on the whole top surface of the resin primer layer.

The obtained base material was immersed, for 10 minutes, in the electroless copper plating solution prepared in Reference Example 2 heated at 60°C. The base material taken out therefrom was then washed with water and was dried on a hot plate at 120°C for 10 minutes to obtain a plated base material.

For the metal plating film on this plated base material, film uniformity and base material adhesion were evaluated similarly to Example 1. Table 1 collectively lists the results.

### [Comparative Examples 10 to 12]

The procedure and the evaluation in Examples 1 were repeated except that the resin primer was not added. Table 1 collectively lists the results.

**Table 1**

| | Resin primer | | Solvent | Base material | Priming layer formation | Film uniformity | Base material adhesion |
|---|---|---|---|---|---|---|---|
| | Primary agent | Hardener | | | | | |
| Example 1 | PR-A | HA-A | EtOH | PC | Monolayer | A | A |
| Example 2 | PR-A | HA-A | EtOH | Acrylic | Monolayer | A | A |
| Example 3 | PR-A | HA-A | EtOH | ABS | Monolayer | A | A |
| Example 4 | PR-B | HA-B | EtOH | PC | Monolayer | A | A |
| Example 5 | PR-B | HA-B | EtOH | Acrylic | Monolayer | A | A |
| Example 6 | PR-B | HA-B | EtOH | ABS | Monolayer | A | A |
| Example 7 | PR-C | HA-C | TH-C | PC | Monolayer | A | A |
| Example 8 | PR-C | HA-C | TH-C | Acrylic | Monolayer | A | A |
| Example 9 | PR-D | HA-D | MEK/PrOH | PI | Monolayer | A | A |
| Example 10 | PR-E | HA-E | DAA | PET | Monolayer | A | A |
| Comparative Example 1 | PR-A | HA-A | EtOH | PC | Bilayer | A | C |
| Comparative Example 2 | PR-A | HA-A | EtOH | Acrylic | Bilayer | A | C |
| Comparative Example 3 | PR-A | HA-A | EtOH | ABS | Bilayer | A | C |
| Comparative Example 4 | PR-B | HA-B | EtOH | PC | Bilayer | A | C |
| Comparative Example 5 | PR-B | HA-B | EtOH | Acrylic | Bilayer | A | C |
| Comparative Example 6 | PR-B | HA-B | EtOH | ABS | Bilayer | A | C |
| Comparative Example 7 | PR-C | HA-C | TH-C | PC | Bilayer | A | C |
| Comparative Example 8 | PR-C | HA-C | TH-C | Acrylic | Bilayer | B | C |
| Comparative Example 9 | PR-D | HA-D | MEK | PI | Bilayer | A | B |
| Comparative Example 10 | Absent | | EtOH | PC | Monolayer | A | B |
| Comparative Example 11 | Absent | | EtOH | Acrylic | Monolayer | A | B |
| Comparative Example 12 | Absent | | EtOH | ABS | Monolayer | A | B |

As listed in Table 1, when forming the priming layer using the primer of the present invention comprising the resin primer for electroless plating and forming the plating film thereon (Examples 1 to 10), the formed metal plating films had superior uniformity and had adhesion in terms of the tape test.

In contrast, when forming the resin primer layer on the base material, forming the priming layer using the primer containing no resin primer (containing the hyperbranched polymer having an ammonium group at a molecular terminal alone), and forming the plating film thereon (Comparative Examples 1 to 9), adhesion to the base materials was not obtained, although the uniformity of the metal plating films was generally favorable. When directly forming the priming layer on the base material using the primer containing no resin primer and subsequently forming the plating film thereon (Comparative Examples 10 to 12), adhesion to the base materials was also poor, although the uniformity of the metal plating films was favorable. In a comparative example, when a part at which the metal plating film had been delaminated was observed, separation occurring at the boundary face between the metal plating film and the priming layer was observed.

The foregoing results reveal that the primer for plating of the present invention comprising the resin primer for electroless plating is advantageous in obtaining a plating film having uniformity and high adhesion to various kinds of base materials.

### Prior Art Document

### Patent Document

Patent Document 1: WO 2010/021386 pamphlet

## Claims

1. A primer for forming a metal plating film on a base material by electroless plating, the primer comprising:
(a) a hyperbranched polymer having an ammonium group at a molecular terminal and having a weight-average molecular weight of 1,000 to 5,000,000;
(b) metal fine particles; and
(c) a resin primer for electroless plating.

2. The primer according to claim 1, wherein the resin primer for electroless plating (c) is at least one resin primer selected from the group consisting of an acrylic resin primer, an acrylic/silicone resin primer, an acrylic/urethane resin primer, a polyester resin primer, a fluorine-based resin primer, an epoxy resin primer, and a polyurethane resin primer.

3. The primer according to claim 2, wherein the resin primer for electroless plating (c) is at least one resin primer selected from the group consisting of an acrylic/silicone resin primer, an acrylic/urethane resin primer, a polyester resin primer, and a polyurethane resin primer.

4. The primer according to any one of claims 1 to 3, wherein the ammonium group of the hyperbranched polymer (a) is attached to the metal fine particles (b) to form a complex.

5. The primer according to any one of claims 1 to 4, wherein the hyperbranched polymer (a) is a hyperbranched polymer of Formula [1]: 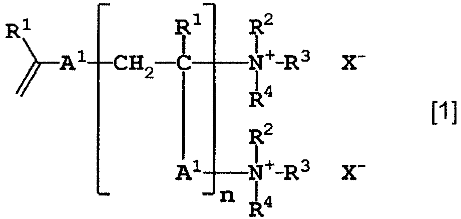 (where R¹ are each independently a hydrogen atom or a methyl group; R² to R⁴ are each independently a hydrogen atom, a linear, branched, or cyclic C₁₋₂₀ alkyl group (where the alkyl group is optionally substituted with an alkoxy group, a hydroxy group, an ammonium group, a carboxy group, or a cyano group), a C₇₋₂₀ arylalkyl group (where the arylalkyl group is optionally substituted with an alkoxy group, a hydroxy group, an ammonium group, a carboxy group, or a cyano group), or -(CH₂CH₂O)ₘR⁵ (where R⁵ is a hydrogen atom or a methyl group; and m is an integer of 2 to 100), or two groups of R² to R⁴ together are a linear, branched, or cyclic alkylene group, or a ring may be formed by R² to R⁴ together with a nitrogen atom to which R² to R⁴ are attached; X⁻ is an anion; n is a number of repeating unit structures and an integer of 5 to 100,000; and A¹ is a structure of Formula [2]: 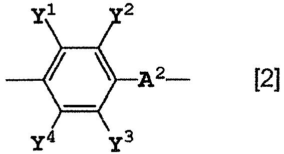 (where A² is a linear, branched, or cyclic C₁₋₃₀ alkylene group optionally containing an ether bond or an ester bond; and Y¹ to Y⁴ are each independently a hydrogen atom, a C₁₋₂₀ alkyl group, a C₁₋₂₀ alkoxy group, a nitro group, a hydroxy group, an amino group, a carboxy group, or a cyano group)).

6. The primer according to claim 5, wherein the hyperbranched polymer (a) is a hyperbranched polymer of Formula [3]: 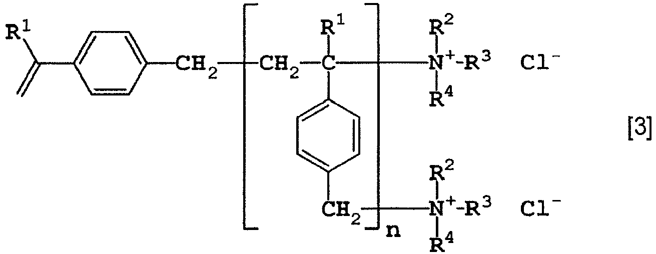 (where R¹ to R⁴, and n are the same as those defined above).

7. The primer according to any one of claims 1 to 6, wherein the metal fine particles (b) are metal fine particles of at least one selected from the group consisting of iron (Fe), cobalt (Co), nickel (Ni), copper (Cu), palladium (Pd), silver (Ag), tin (Sn), platinum (Pt), and gold (Au).

8. The primer according to claim 7, wherein the metal fine particles (b) are palladium fine particles.

9. The primer according to claim 7 or 8, wherein the metal fine particles (b) have an average particle diameter of 1 nm to 100 nm.

10. A priming layer for electroless plating, obtained by forming a layer of the primer as claimed in any one of claims 1 to 9.

11. A metal plating film, formed by performing electroless plating on the priming layer for electroless plating as claimed in claim 10, on the priming layer.

12. A metal-coated base material comprising:
a base material;
the priming layer for electroless plating as claimed in claim 10 formed on the base material; and
the metal plating film as claimed in claim 11 formed on the priming layer for electroless plating.

13. A method for producing a metal-coated base material, the method comprising:
process A: applying the primer as claimed in any one of claims 1 to 9 onto a base material to form a priming layer; and
process B: immersing the base material having the priming layer in an electroless plating bath to form a metal plating film.
